# EUROPÄISCHE PATENTSCHRIFT

(11) **EP 0 863 785 B1**
(45) Veröffentlichungstag und Bekanntmachung des Hinweises auf die Patenterteilung: **30.08.2000**
(21) Anmeldenummer: 96928369.6
(22) Anmeldetag: 23.07.1996
(51) Int. Cl.: B01D 29/07, B01D 46/52

(54) **FILTERELEMENT**
FILTER ELEMENT
ELEMENT FILTRANT

(30) Priorität: 15.09.1995 DE 19534254
(43) Veröffentlichungstag der Anmeldung: 16.09.1998
(73) Patentinhaber: FILTERWERK MANN & HUMMEL GmbH, 71631 Ludwigsburg (DE)
(72) Erfinder: BUTZ, Thomas, D-70825 Korntal-Münchingen (DE); KALLER, Ralf, D-70806 Kornwestheim (DE); KISSEL, Günther, D-70567 Stuttgart (DE); MAYER, Gerhard, D-74385 Pleidelsheim (DE); KOCH, Volker, D-70193 Stuttgart (DE); SCHNABEL, Werner, D-74747 Ravenstein (DE)
(74) Vertreter: Voth, Gerhard, Dipl.-Ing.
(86) Internationale Anmeldenummer: EP9603239
(87) Internationale Veröffentlichungsnummer: WO9710039

(56) Entgegenhaltungen:
- DE-A- 4 201 702
- US-A- 2 002 936
- US-A- 2 058 669
- US-A- 2 479 722
- US-A- 3 243 943

## Beschreibung

Es wird ein Filterelement nach dem Oberbegriff des Hauptanspruchs vorgeschlagen. Aus der DE-PS 40 02 078 ist ein Filterelement bekannt. Dieses besteht aus einem zick-zack-förmig gefalteten Vlies, das mit Rahmenelementen versehen ist, wobei die Rahmenelemente teilweise durch die thermoplastische Verschweißung des Vlieses hergestellt werden. Ein solches Filterelement wird beispielsweise im Automobilbau verwendet. Ein Nachteil dieses Filterelements ist darin zu sehen, daß es eine gewisse Instabilität zeigt. Insbesondere bei Druckstößen besteht die Gefahr, daß die Falten durchknicken oder kollabieren. Dadurch wird die Filterwirkung erheblich reduziert bzw. der Durchflußwiderstand stark vergrößert.

Zur Vermeidung dieser Nachteile ist aus der US-A-2 058 669 bekannt, ein zick-zack-förmig gefaltetes Filterelement mit einem Stützkamm zu versehen. Dieser Stützkamm ist geeignet, die Stabilität der Falten wesentlich zu erhöhen. Ein Nachteil des Stützkamms ist jedoch darin zu sehen, daß die wirksame Filterfläche sehr stark verringert wird.

Der Erfindung liegt die Aufgabe zugrunde, ein Filterelement zu schaffen, welches die genannten Nachteile vermeidet, eine hohe Stabilität aufweist und gleichzeitig den Durchflußwiderstand nur unwesentlich erhöht. Außerdem soll das Filterelement einfach entsorgbar sein.

Diese Aufgabe wird ausgehend von dem Oberbegriff des Hauptanspruchs durch dessen kennzeichnenden Merkmale gelöst.

Der wesentliche Vorteil der Erfindung liegt darin, daß die Abstützung des Filtermaterials partiell erfolgt, d. h. das Filtermaterial wird in den Bereichen abgestützt, in denen eine erhöhte Durchbiegung auftreten kann. Dadurch wird die wirksame Filterfläche nicht oder nur in einem sehr geringen Maße beeinträchtigt. Die Abstützung erfolgt zweckmäßigerweise von der Rohluftseite her, d. h. das Schwertsegment greift in die Rohluftfalte ein, stützt die Platte in Richtung der Durchströmung ab und verhindert gleichzeitig ein Einknicken der Falten.

Die Erfindung sieht vor, das Schwertsegment mit einem Durchbruch zu versehen. Dieser Durchbruch bildet Taschen, die geeignet sind, mit Leimwerkstoff oder mit Klebstoff gefüllt zu werden.

Insbesondere bei der Verwendung als Filter für die Ansaugluft einer Brennkraftmaschine kann eine Pulsation auftreten, die durch den Motor verursacht wird. Dieser Pulsation könnte eine Vibration des Filterelements verursachen. Die erfindungsgemäße Vorrichtung verhindert wirksam die Wirkung der Pulsation auf das Filterelement.

Zur Fixierung der ebenen Platte an dem Rahmen ist gemäß einer weiteren Ausgestaltung der Erfindung eine Polyurethanschaumdichtung längs des Rahmens angeordnet. Diese wird im unausgehärteten Zustand in eine Dichtungskammer des Rahmens eingegossen. Diese fließt beim Aushärten geringfügig in die Faltentaschen des Filterelements und stellt somit die Abdichtung und Verbindung von Rahmen und Platte her. Anstelle eines Polyurethanschaums kann auch Silikonschaum oder ähnliches elastisches Material angewendet werden.

Das Handling wird nach einer weiteren Ausgestaltung der Erfindung durch Entnahmelaschen erleichtert. Diese sind am Rahmen angeordnet und können für die Entnahme des Filterelements aus einem Gehäuse hochgeklappt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher dargestellt. Es zeigt
- Figur 1: ein Filterelement in einer Schnittdarstellung
- Figur 2: ein Filterelement in Draufsichtdarstellung
- Figur 3: eine Detaildarstellung des Filterelements mit einem Schwertsegment.

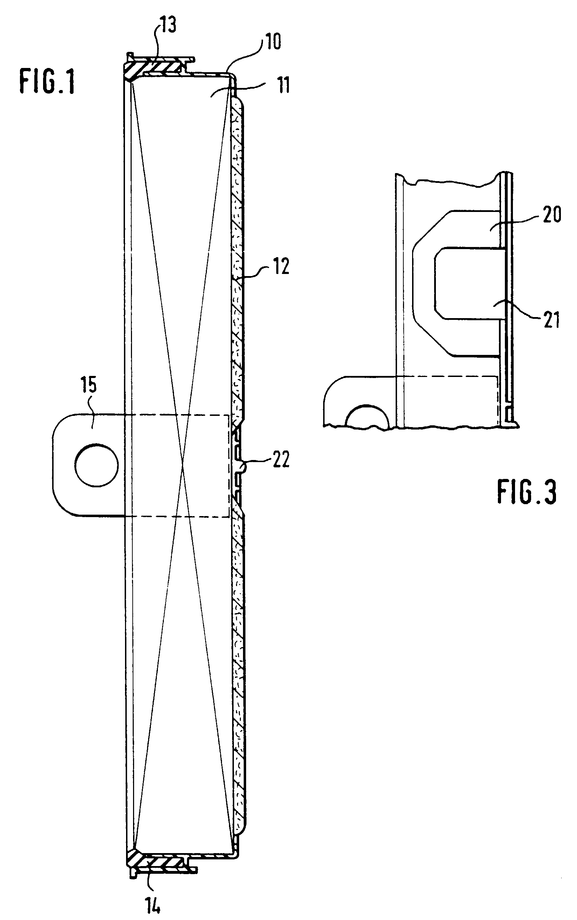

Das Filterelement gemäß Figur 1 besteht aus einem Rahmen 10, der beispielsweise aus thermoplastischem Kunststoffmaterial hergestellt ist. In diesem Rahmen ist ein zick-zack-förmig gefaltetes Filtermedium 11 angeordnet. An der Rohlufteintrittsseite befindet sich ein Vorabscheidervlies 12, welches Grobschmutz wirksam zurückhält und für eine gleichmäßige Luftverteilung sorgt. Der Rahmen weist umlaufende Dichtungstaschen 13 auf. In diesen Dichtungstaschen ist eine Silikonschaumdichtung eingegossen. Wie in der Figur ersichtlich, erstreckt sich der Silikonschaum noch in den Bereich des Filtermediums und stellt damit eine umlaufende Fixierung des Filtermediums her. Am Rahmen 10 befindet sich eine oder mehrere Entnahmelaschen 15.

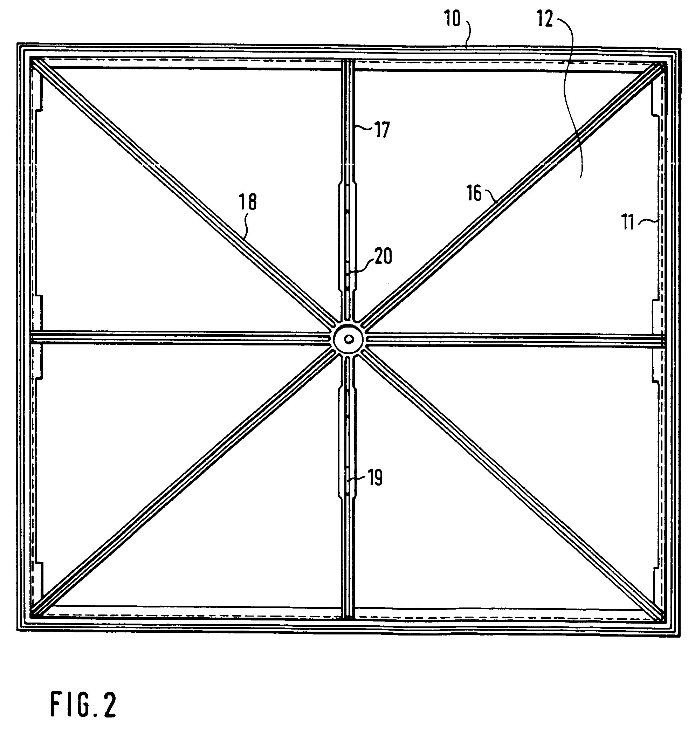

Die Draufsichtdarstellung gemäß Figur 2 zeigt den Rahmen 10 mit dem eingelegten Filtermedium. Der Rahmen ist stabilisiert mit Stegen 16, 17, 18. Diese Stege sind im Zentrum miteinander verbunden. Diese Verbindung ist gleichzeitig der Anspritzpunkt bei der Herstellung des thermoplastischen Spritzgußteils. Der Verbindungsknoten 22 sorgt für eine zusätzliche Stabilisierung des Filtermediums im zentralen Bereich. Der Steg 17 weist ferner zwei Schwertsegmente 19, 20 auf, welche in Figur 3 näher dargestellt sind.

Das Vorabscheidervlies 12, welches auf der in Figur 2 sichtbaren Seite liegt, enthält an den Schwertsegmentbereichen Schlitze, die einen Durchtritt dieses Segments ermöglichen.

Das in Figur 3 in vergrößerter Darstellung gezeigte Schwertsegment 20 weist einen Hohlraum 21 auf. Das Schwertsegment greift in eine Tasche des Filtermediums ein und liegt damit im wesentlichen mit seinen beiden Flächen an dem Filtermedium an. Der Hohlraum 21 kann mit einem Leimwerkstoff gefüllt werden. Dieser Leimwerkstoff verbindet sich mit den beiden Flächen des angrenzenden Filtermediums und stellt eine zuverlässige Verbindung zwischen Filtermedium und Schwertsegment dar.

Das Dichtungsmaterial, d. h. die Silikonschaumdichtung, welche in die Dichtungstasche eingegossen ist, verbindet sich nicht mit dem Rahmen 10. Damit besteht die Möglichkeit, das verbrauchte Filterelement mit der Dichtung aus dem Rahmen herauszunehmen und getrennt zu entsorgen. Ebenso kann das Vorabscheidervlies 12, da es lediglich in den Rahmen eingelegt ist, nach der Entnahme des Filtermediums von dem Rahmen gelöst werden.

## Patentansprüche

1. Filterelement bestehend aus einem zick-zack-förmig gefalteten Filtermedium, insbesondere Vlies oder Papier, welches in Form einer ebenen Platte hergestellt ist, wobei ein Rahmen längs der Stirnseiten vorgesehen ist und die ebene Platte in dem Rahmen fixiert ist und wobei quer über die Platte verlaufende Stege (16, 17, 18) vorgesehen sind, wobei wenigstens ein Steg wenigstens ein Schwertsegment (20) aufweist, wobei sich das Schwertsegment in Falten des zick-zack-förmig gefalteten Filtermediums (11) erstreckt und stabilisiert, dadurch gekennzeichnet, daß das Schwertsegment (20) wenigstens einen Durchbruch (21) aufweist, wobei dieser Durchbruch (21) mit einem Leimwerkstoff gefüllt ist.

2. Filterelement nach einem der vorherigen Ansprüche, dadurch gekennzeichnet, daß auf der Rohluftseite ein Vorabscheidervlies (12) angeordnet ist.

3. Filterelement nach einem der vorherigen Ansprüche, dadurch gekennzeichnet, daß das Filtermedium (11) mit dem Rahmen (10) über einen elastischen Werkstoff, insbesondere einen Silikon-Schaum (14) verbunden ist.

4. Filterelement nach einem der vorherigen Ansprüche, dadurch gekennzeichnet, daß rohluftseitig Entnahmelaschen (15) angeordnet sind.

## Claims

1. Filter element, including a filter medium which is folded in a zig-zag manner, more especially non-woven fabric or paper, which is produced in the form of a flat sheet, a frame being provided along the end faces, and the flat sheet being secured in the frame, and ribs (16, 17, 18) being provided, which extend transversely over the sheet, at least one rib having at least one tongue-like segment (20), the tongue-like segment extending and being stabilised in folds of the filter medium (11), which is folded in a zig-zag manner, characterised in that the tongue-like segment (20) has at least one opening (21), this opening (21) being filled with an adhesive material.

2. Filter element according to one of the previous claims, characterised in that a prefiltering mat of non-woven fabric (12) is disposed on the unfiltered air side.

3. Filter element according to one of the previous claims, characterised in that the filter medium (11) is connected to the frame (10) via a resilient material, more especially a silicone foam (14).

4. Filter element according to one of the previous claims, characterised in that extracting lugs (15) are disposed on the unfiltered air side.

## Revendications

1. Elément filtrant composé d'un matériau filtrant plié en accordéon, en particulier un non-tissé ou un papier, fabriqué sous la forme d'une plaque plane, comportant :
- le long des faces frontales, un cadre dans lequel est fixée la plaque plane,
- au dessus de la plaque, des barrettes (16, 17, 18) dont une au moins présente un segment de lame (20) qui est introduit dans un pli du matériau filtrant (11) plié en accordéon et le stabilise,
caractérisé en ce que
le segment de la lame (20) est percé d'au moins un passage (21) et ce passage est rempli d'un matériau adhésif.

2. Elément filtrant selon la revendication 1,
caractérisé en ce que
du côté d'entrée de l'air brut, est monté un voile de préséparation (12).

3. Elément filtrant selon l'une quelconque des revendications 1 ou 2,
caractérisé en ce que
le matériau filtrant (11) est relié au cadre (10) par un produit élastique, en particulier une mousse de silicone (14).

4. Elément filtrant selon l'une quelconque des revendications précédentes,
caractérisé en ce que
des pattes de prise (15) sont montées sur le côté d'entrée d'air brut.
